# FASCICULE DE BREVET EUROPEEN

(11) **EP 1 078 845 B1**
(45) Date de publication et mention de la délivrance du brevet: **04.06.2003**
(21) Numéro de dépôt: 00402361.0
(22) Date de dépôt: 25.08.2000
(51) Int. Cl.: B62D 43/00

(54) **Dispositif antivol pour roue de secours apparente**
Antidiebstahlsystem für ein sehbares Reserverad
Anti-theft system for a visible spare wheel

(30) Priorité: 27.08.1999 FR 9910856
(43) Date de publication de la demande: 28.02.2001
(73) Titulaire: Renault s.a.s., 92100 Boulogne Billancourt (FR)
(72) Inventeur: Lafertre, Karl, 75006 Paris (FR)

(56) Documents cités:
- EP-A- 0 615 895

## Description

L'invention concerne un dispositif antivol pour une roue de secours apparente qui est montée à l'extérieur de la carrosserie d'un véhicule automobile.

L'invention concerne plus particulièrement un dispositif antivol pour une roue de secours apparente qui est montée à l'extérieur de la carrosserie d'un véhicule automobile, notamment d'un véhicule de loisirs, du type dans lequel une face avant de la jante de la roue de secours est montée en appui axial sur un support qui fait saillie vers l'extérieur à partir d'un élément de la carrosserie du véhicule, notamment d'un ouvrant transversal arrière du véhicule, et du type dans lequel la jante est fixée sur ce support par l'intermédiaire de moyens de fixation de la roue comportant au moins un boulon de fixation qui traverse un des perçages excentrés de fixation de la roue et comportent au moins un écrou associé de fixation.

On connaît de nombreux exemples de dispositifs antivol pour roues de secours apparentes du type décrit précédemment.

Généralement, les roues de secours apparentes sont fixées au support selon deux montages différents, soit par des écrous qui sont vissés sur des goujons disposés en regard des perçages excentrés de fixation de la roue et qui font saillie vers l'extérieur et vers l'arrière du véhicule à partir du support, soit par des vis qui traversent les perçages excentrés de fixation de la roue et sont reçues dans des écrous prisonniers liés au support.

Selon une première conception de dispositif antivol il est connu d'utiliser des écrous ou vis spéciaux qui ne peuvent être dévissés qu'à l'aide d'une douille conforme que l'utilisateur rajoute à l'extrémité de la clé qu'il utilise pour démonter les écrous ou vis de roue conventionnels.

Une telle douille conforme présente l'inconvénient d'être de petite taille, si bien qu'elle peut être facilement égarée, ce qui rend alors le démontage de la roue de secours impossible.

Selon une deuxième conception de dispositif antivol, qui concerne spécifiquement les montages de roue à goujons, il est connu d'utiliser un cadenas dont la boucle de fermeture traverse un perçage transversal de l'un des goujons de fixation de la roue.

Cette conception présente l'inconvénient de laisser le cadenas accessible de l'extérieur du véhicule si bien qu'il peut être forcé ou coupé avec un coupe-boulon conventionnel. Cette opération est d'autant plus aisée que la boucle du cadenas, pour être à même de traverser le perçage transversal du goujon considéré, est nécessairement de petit diamètre.

Selon une troisième conception de dispositif antivol, il est connu de recouvrir la roue d'un cache rigide de forme complémentaire de la roue dont une bande métallique périphérique est serrée sur la bande de roulement du pneumatique de la roue, puis verrouillée.

Cette conception présente l'inconvénient de présenter une résistance limitée à l'arrachement. En effet, le pneumatique étant radialement élastique, une déformation minime du pneumatique, réalisée par exemple à l'aide d'un levier inséré entre le cache et le pneumatique, ou un dégonflage du pneumatique, suffisent à permettre l'arrachement du cache.

Pour remédier à ces inconvénients, l'invention propose un dispositif antivol qui n'est accessible que depuis l'intérieur du véhicule.

Le document EP 0 615 895 A divulgue un dispositif d'accord avec le préambule de la revendication 1.

Dans ce but l'invention propose concerne un dispositif antivol pour une roue de secours apparente du type décrit précédemment, qui comporte un cache de sécurité qui, dans une position montée dans laquelle il est verrouillé depuis l'intérieur du véhicule, recouvre au moins une partie de la totalité de la face arrière de la roue pour interdire l'accès auxdits boulons et écrous de fixation de la jante sur le support.

Selon d'autres caractéristiques de l'invention :
- le cache de sécurité est verrouillé de l'intérieur du véhicule par l'intermédiaire d'une tige de verrouillage qui traverse une ouverture de la jante de la roue et un passage commun du support et de l'élément de carrosserie du véhicule, et d'un organe de verrouillage qui est fixé à l'extrémité de la tige de verrouillage faisant saillie à l'intérieur de l'élément de carrosserie du véhicule,
- la tige de verrouillage est une tige filetée du cache dont l'extrémité libre reçoit un écrou de verrouillage fixé par vissage depuis l'intérieur de l'élément de carrosserie,
- la tige filetée est coaxiale à la roue et traverse une ouverture centrale de celle-ci,
- le cache de sécurité comporte des moyens d'arrêt en rotation par rapport à la carrosserie du véhicule pour empêcher son démontage par dévissage de la tige filetée coaxiale depuis l'extérieur du véhicule,
- les moyens d'arrêt en rotation comportent au moins un plot excentré creux, qui s'étend à partir de la face avant du cache de sécurité tournée vers la jante, et qui est destiné, au montage, à coopérer avec les moyens de fixation de la roue,
- le cache de sécurité recouvre entièrement la face arrière de la roue,
- le cache de sécurité comporte une partie centrale, qui recouvre la face arrière de la jante, et une partie annulaire périphérique formant un capot qui entoure la surface libre du pneu de la roue,
- la partie centrale et la partie annulaire du cache de sécurité sont réalisés par moulage d'un matériau plastique,
- la partie centrale du cache de sécurité est vissée sur une face avant de la partie annulaire du cache de sécurité qui est tournée vers la roue,
- la tige de verrouillage du cache de sécurité est sertie dans un noyau central de la partie centrale du cache de sécurité.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective d'un cache de sécurité pour un dispositif antivol selon un premier mode de réalisation de l'invention ;
- la figure 2 est une vue en coupe selon la ligne 2-2 de la figure 1 du dispositif antivol selon un premier mode de réalisation de l'invention représenté démonté ;
- la figure 3 est une vue en coupe selon la figure 2 du dispositif antivol de la figure 2 représenté monté ;
- la figure 4 est une vue en coupe selon la ligne 4-4 de la figure 1 représentant les moyens d'arrêt en rotation du cache de sécurité selon le premier mode de réalisation de l'invention ;
- la figure 5 est une vue en perspective éclatée d'un cache de sécurité pour un dispositif antivol selon un second mode de réalisation de l'invention ;
- la figure 6 est une vue en coupe selon la ligne 6-6 de la figure 5 du dispositif antivol selon le second mode de réalisation de l'invention représenté démonté ; et
- la figure 7 est une vue selon la figure 6 du dispositif antivol de la figure 6 représenté monté.

Dans la description qui va suivre, des chiffres de référence identiques désignent des éléments identiques ou ayant des fonctions similaires.

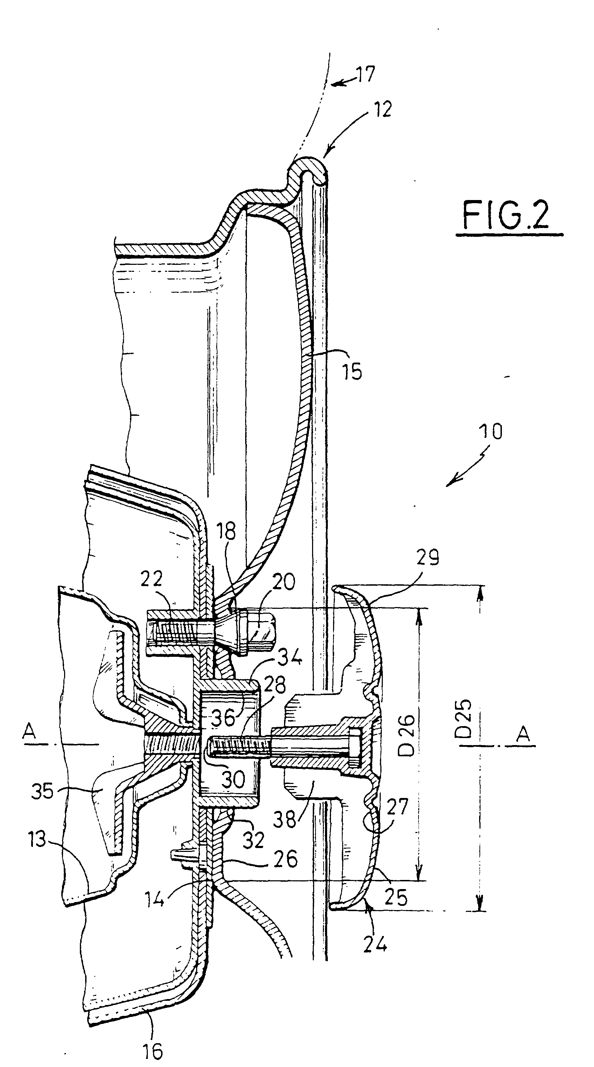

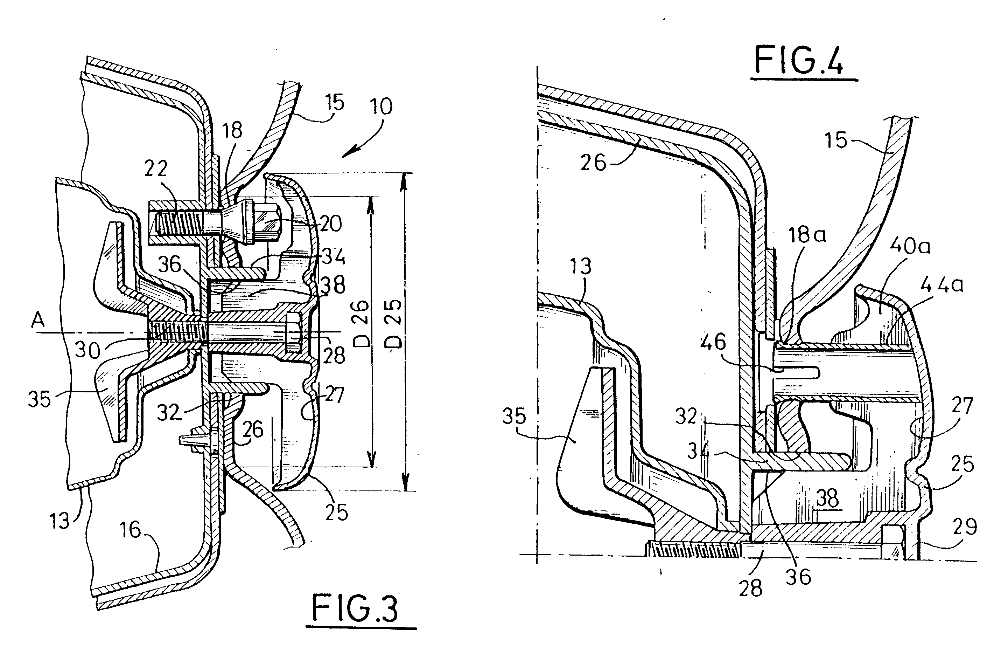

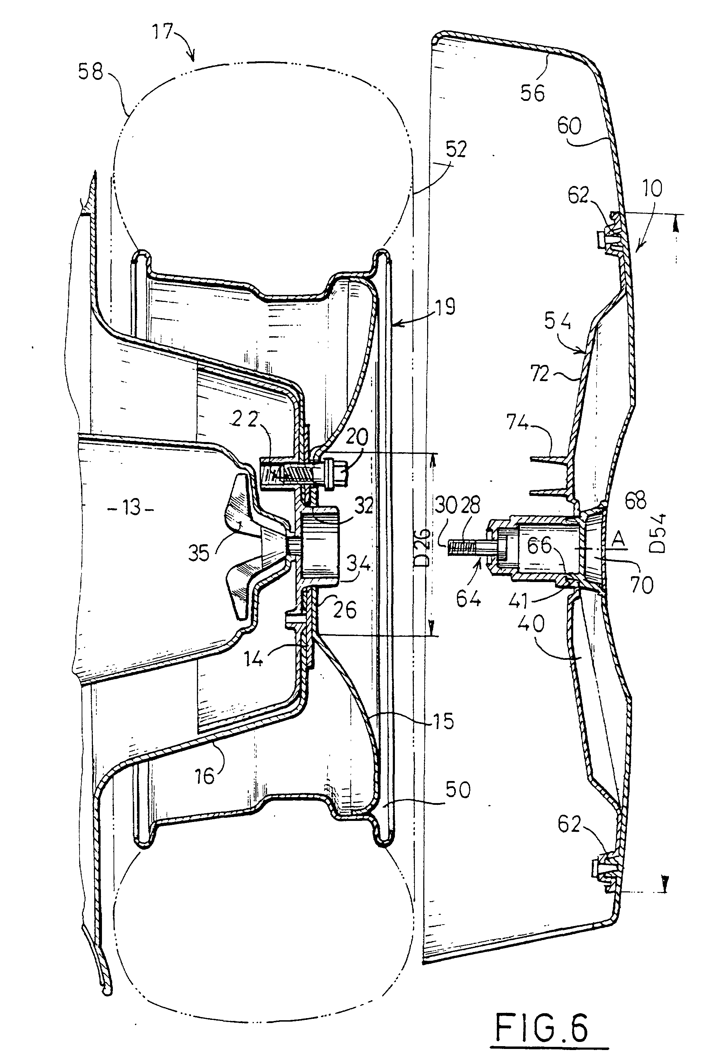

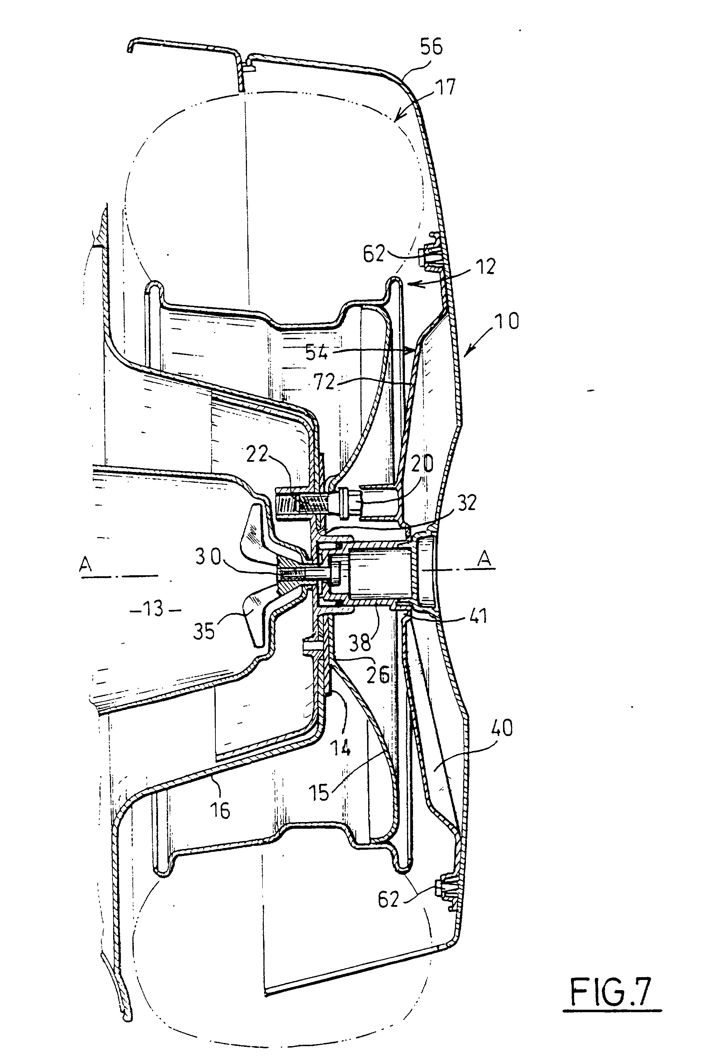

On a représenté aux figures 2 et 3 l'ensemble d'un dispositif antivol 10 pour une roue 12 de secours apparente conformément à un premier mode de réalisation de l'invention, et aux figures 6 et 7 un dispositif antivol 10 conformément à un second mode de réalisation de l'invention.

De manière connue, le dispositif 10 est destiné à être utilisé pour empêcher le démontage, de l'extérieur du véhicule (non représenté) de la roue de secours 12 du véhicule qui est montée à l'extérieur de la carrosserie du véhicule, de façon à éviter que celle-ci ne puisse être volée.

Une telle roue de secours 12 est notamment une roue du type de celles que l'on peut rencontrer sur des véhicules de loisirs, tels que des véhicules tout-terrain aussi appelés véhicules "4×4".

La roue de secours 12 est montée conventionnellement sur un élément 13 de carrosserie du véhicule, notamment un ouvrant transversal arrière 13 du véhicule, suivant un axe A qui est longitudinal et sensiblement perpendiculaire à l'ouvrant 13.

La roue de secours 12 est composée d'une jante 15 et d'un pneumatique 17.

À cet effet, une face 14 avant transversale de la jante 15 de la roue de secours 12 est montée en appui axial sur un support 16 qui est lié à l'élément 13 de carrosserie du véhicule, et qui fait saillie vers l'extérieur à partir de celui-ci. La jante 15 comporte des moyens de fixation sur le support 16, notamment des perçages 18 qui sont excentrés par rapport à son axe A, et qui sont traversés par au moins un boulon 20 qui est reçu dans au moins un écrou 22. Les perçages 18 excentrés sont, de façon connue, ceux qui sont utilisés conventionnellement pour la fixation de la roue 12 sur des moyeux (non représentés) des essieux du véhicule.

Dans le mode de réalisation préférée de l'invention, on a représenté une roue de secours 12 qui est fixée sur le support 16 par l'intermédiaire de boulons 20 qui sont reçus dans des écrous prisonniers 22 portés par le support 16. Il sera compris que cette disposition n'est pas limitative de l'invention et que la fixation de la roue de secours 12 sur le support 16 pourrait être aussi assurée par des goujons solidaires du support 16 et par des écrous complémentaires qui seraient serrés contre une face 26 transversale arrière de la jante 15.

Conformément à l'invention, pour empêcher le démontage de la roue de secours 12, le dispositif antivol 10 comporte un cache de sécurité 24 qui, dans une position montée représentée à la figure 2, recouvre au moins une partie de la face 26 transversale arrière de la roue 12 pour interdire l'accès aux dits boulons 20 et écrou 22 de fixation de la jante 15 sur le support 16.

Dans le premier mode de réalisation de l'invention, le cache de sécurité 24 du dispositif antivol 10 interdit l'accès aux boulons 20 en recouvrant au moins la face transversale arrière 26 suivant un disque qui recouvre le plan de fixation des boulons 20.

Ainsi, selon le premier mode de réalisation de l'invention, le cache de sécurité 24 comporte une coupelle 25 d'un diamètre D₂₅ qui est légèrement supérieur au diamètre D₂₆ de la face 26 transversale arrière de la jante 15. De la sorte, le cache de sécurité 24, une fois monté, interdit l'accès aux moyens de fixation de la jante 15, et notamment aux boulons 20 de fixation de la jante 15 sur le support 16.

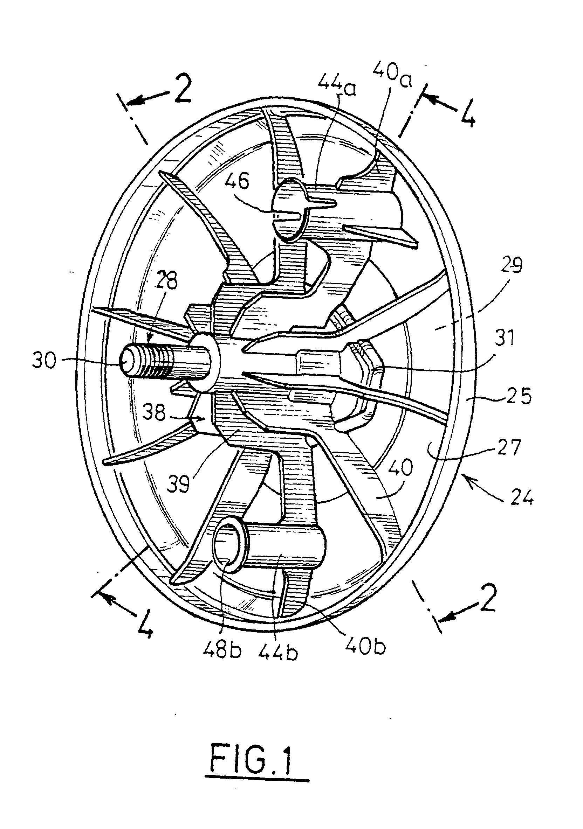

Comme l'illustrent les figures 1, 2, et 3 le cache de sécurité 24 comporte une tige de verrouillage 28 qui est destinée à traverser une perçage central 32 de la jante 15, le support 16, et l'élément 13 de carrosserie du véhicule, et dont l'extrémité 30 peut être verrouillée de l'intérieur de l'élément 13 de carrosserie du véhicule à l'aide d'un organe de verrouillage 35.

Sur la figure 2, on a représenté ce cache de sécurité 24 qui est mis en position coaxialement à l'axe A de façon qu'il soit prêt à être monté sur la jante 15 de la roue 12 pour réaliser l'interdiction de l'accès aux boulons 20.

Dans ce montage, le perçage central 32 d'axe A de la jante 15 permet, lors de la mise en place préalable de la roue 12 sur le support 16, de centrer celle-ci par l'intermédiaire d'un moyeu 34 de centrage, d'axe A, qui est porté par le support 16. Ce moyeu 34 de centrage pénètre dans le perçage central 32 de la roue 16 lorsque celle-ci est mise en position sur le support 16 et boulonnée conformément aux figures 2 et 3.

Le moyeu 34 de centrage du support 16 est tubulaire et comporte un alésage 36 qui est destiné à recevoir un manchon 38 complémentaire, de génératrice cylindrique, qui fait partie du cache 24 de sécurité. Comme l'illustre plus particulièrement la figure 1, le manchon cylindrique 38 s'étend axialement vers l'avant à partir de la coupelle 25. Avantageusement, le manchon 38 est constitué de la réunion de parties 39 de nervures 40, et est lié à une face 27 avant de la coupelle 25 par des nervures 40 radiales qui rayonnent autour de l'axe général du cache de sécurité 24. Ces nervures 40 s'étendent vers l'avant à partir de la face 27 avant de la coupelle 25 et sont réparties angulairement de façon régulière, de sorte qu'elles permettent aussi de rigidifier la coupelle 25.

Dans le mode de réalisation préféré de l'invention, le cache 24 de sécurité, c'est à dire la coupelle 25 et les nervures 40 est réalisé par moulage d'un matériau plastique, notamment par injection, et les nervures 40, qui présentent une certaine élasticité, permettent un démoulage aisé du cache de sécurité 24.

Sur la figure 3 on a représenté le cache de sécurité 24 dont la tige de verrouillage 28 est filetée est verrouillée de l'intérieur de l'élément 13 de carrosserie du véhicule par un écrou 35 à oreilles. Le cache de sécurité 24 est ainsi verrouillé axialement. Cette disposition n'est pas limitative de l'invention, et en variante, la tige de verrouillage 28 pourrait par exemple être une tige 28 lisse dont l'extrémité 30 serait percée transversalement et qui serait immobilisée axialement par une goupille conforme.

Avantageusement, lors de la fabrication du cache de sécurité 24, la tige 28 de verrouillage est noyée dans le matériau plastique moulé du cache 24.

Pour mettre en place le dispositif antivol 10, l'utilisateur boulonne préalablement la roue de secours 12 sur le support 26, puis enfile le cache de sécurité 24 sur celle-ci, et enfin ouvre l'ouvrant 13 de façon à avoir accès à l'écrou à oreilles 35 qu'il visse sur l'extrémité 30 de la tige filetée 28, conformément à la figure 3.

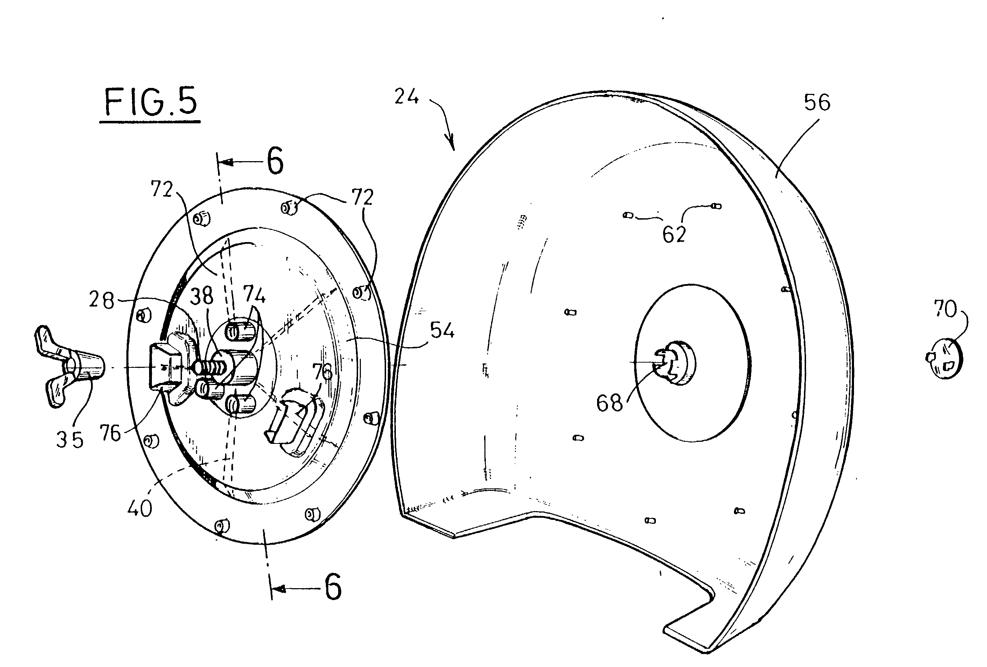

Avantageusement, comme l'illustre la figure 4, le dispositif antivol 10 comporte des moyens d'arrêt en rotation du cache de sécurité 24 par rapport à la carrosserie du véhicule, et notamment par rapport à l'ouvrant 13, de façon à empêcher le démontage du cache de sécurité 24 par dévissage de la tige filetée 28.

En effet, de tels moyens d'arrêts sont indispensables pour éviter qu'un éventuel voleur, en imprimant un mouvement de rotation dans le sens anti-horaire au cache de sécurité 24, ne parvienne à dévisser celui-ci de l'écrou à oreilles 35.

Tout moyen d'immobilisation relative de la tige filetée 28 par rapport à l'écrou à oreilles 35, tel qu'un goupille transversale ou un autre moyen d'arrêt en rotation de l'écrou à oreilles 35 pourrait convenir à la réalisation des moyens d'arrêt en rotation. Toutefois, dans le mode de réalisation préféré de l'invention, les moyens d'arrêt comportent au moins un manchon 44 excentré, qui s'étend à partir de la face avant 27 du cache de sécurité 24, et qui est destiné, au montage, à coopérer avec les moyens de fixation de la roue 12.

Dans le mode de réalisation préféré de l'invention, en position montée de la roue 12, deux perçages 18 de la roue 12 ne reçoivent pas de boulons 20 de fixation. Les deux perçages 18 ainsi laissés libres définissent ainsi deux points de fixation de référence pour les moyens d'arrêt.

En effet, dans le premier mode de réalisation de l'invention, une nervure 40a du cache 24 porte un premier plot axial 44a qui est d'un diamètre sensiblement égal au diamètre d'un perçage 18a libre associé de fixation de la roue 12, et qui est situé radialement à la même distance de l'axe A que ce perçage 18.

Comme l'illustre la figure 1, le premier plot 44a présente la forme d'un tube qui comporte au moins deux fentes axiales 46. Les bords de ces fentes 46 sont susceptibles de se refermer pour permettre le passage du plot axial 44a dans le perçage 18a, puis de s'écarter de façon que la périphérie du plot axial 44a soit en appui sur les bords du perçage libre 18a, comme illustré à la figure 4.

Par ailleurs, comme l'illustre la figure 4, une nervure 40b du cache 24 comporte un deuxième plot axial 44b, qui est d'un diamètre légèrement supérieur au diamètre d'un perçage 18 associé de fixation de la roue 12, qui est aussi laissé libre lors du montage préalable de la roue 12 sur le support 26.

Lorsque le cache 24 est en position, un chanfrein 48b de ce deuxième plot 44b, qui est situé radialement à la même distance de l'axe A que le perçage 18, est en appui sur les bords du perçage 18 de fixation associé de la roue 12.

De la sorte, les premier 44a et deuxième 44b plots déterminent une position univoque du cache 24 de sécurité, et le premier plot 44 immobilise en rotation le cache de sécurité 24 par rapport à la roue 12, et par conséquent aussi par rapport à la carrosserie du véhicule.

Cette mise en position angulaire univoque du cache de sécurité 24 est de surcroît avantageuse en ce qu'elle permet de pourvoir une face arrière 29 de la coupelle 25, représentée à la figure 1, d'une décoration ou d'un enjoliveur qui occupera toujours la même position lorsque le cache de sécurité sera mis en place. A titre d'exemple, sur la figure 1, le cache 24 de sécurité comporte une moulure 31en forme de losange, dont on aperçoit la forme du côté de la face avant 27 de la coupelle 25.

Dans le second mode de réalisation de l'invention, le cache de sécurité 24 du dispositif antivol 10 interdit l'accès aux boulons 20 en recouvrant entièrement une face arrière 50 de la roue. Par rapport au cache de sécurité 24 décrit en référence au premier mode de réalisation de l'invention, le cache de sécurité 24 réalisé selon le second mode de réalisation de l'invention recouvre donc au moins la face arrière 26 de la jante et une face arrière 52 du pneumatique 17.

Dans le second mode de réalisation de l'invention, le cache de sécurité comporte une partie centrale 54, qui recouvre la face arrière 26 de la jante 15, et une partie annulaire périphérique 56 formant un capot qui entoure la surface libre 58 du pneu de la roue, c'est à dire sa bande de roulement, et sa face arrière 52 précédemment décrite.

De la sorte, le cache de sécurité 24, une fois monté, interdit l'accès aux moyens de fixation de la jante 15, et notamment aux boulons 20 de fixation de la jante 15 sur le support 16.

Comme l'illustrent les figures 5, 6, et 7, la partie centrale 54 présente sensiblement la forme d'une coupelle d'un diamètre D₅₄ qui est supérieur au diamètre D₂₆ de la face arrière transversale 26 de la jante 15, et qui est fixée sur une face avant 60 de la partie annulaire périphérique 56 formant capot du cache 24, notamment à l'aide de moyens de vissage périphériques 62.

D'une façon analogue au premier mode de réalisation, et comme représenté aux figures 6 et 7, le cache de sécurité 24 comporte une tige de verrouillage 28 qui est destinée à traverser une perçage central 32 de la jante 15, le support 16, et l'élément 13 de carrosserie du véhicule, et dont l'extrémité 30 peut être verrouillée de l'intérieur de l'élément 13 de carrosserie du véhicule à l'aide d'un organe de verrouillage 35.

Sur la figure 6, on a représenté un cache de sécurité 24 qui est mis en position coaxialement à l'axe A de façon qu'il soit prêt à être monté sur la roue 12 pour réaliser l'interdiction de l'accès aux boulons 20.

Dans ce montage, le perçage central 32 d'axe A de la jante 15 permet, lors de la mise en place préalable de la roue 12 sur le support 16, de centrer celle-ci par l'intermédiaire du moyeu 34 de centrage, d'axe A, qui est porté par le support 16. Ce moyeu 34 de centrage pénètre dans le perçage central 32 de la roue 16 d'une façon analogue au premier mode de réalisation de l'invention, comme illustré aux figures 6 et 7.

Le moyeu 34 de centrage du support 16 est tubulaire et son alésage 36 est destiné à recevoir un manchon 38 complémentaire en forme de cylindre, qui est venu de matière avec la partie centrale 54 du cache 24 de sécurité. Le manchon cylindrique 38 s'étend axialement vers l'avant à partir de la partie centrale 54 du cache 24. Le manchon 38 est percé de façon à permettre le passage de la tige filetée 28 d'une vis 64 qui est insérée puis sertie, lors de l'assemblage du cache de sécurité 24, dans la partie centrale 54 du cache de sécurité 24 par une ouverture 66 arrière. Cette ouverture arrière est agencée en regard d'un orifice 68 du capot 56 qui est obstrué par un bouchon 70.

De la sorte, lorsque le cache de sécurité 24 est assemblé, seule la tige filetée 28 de la vis 64 fait saillie hors du manchon 38, comme illustré à la figure 5.

Avantageusement, la partie centrale 54 du cache de sécurité 24 comporte des nervures 40 arrières et 41 avant radiales qui rayonnent autour de l'axe général du cache de sécurité 24 pour rigidifier la partie centrale 54.

Les éléments du cache de sécurité 24 sont, d'une façon analogue au premier mode de réalisation, réalisés par moulage d'un matériau plastique, notamment par injection.

Sur la figure 7 on a représenté le cache de sécurité 24 dont la tige de verrouillage 28 est filetée est verrouillée de l'intérieur de l'élément 13 de carrosserie du véhicule par l'écrou 35 à oreilles.

D'une façon analogue au premier mode de réalisation de l'invention, et comme l'illustrent les figures 5 et 7, le dispositif antivol 10 comporte des moyens d'arrêt en rotation du cache de sécurité 24 par rapport à la carrosserie du véhicule, et notamment par rapport à l'ouvrant 13, de façon à empêcher le démontage du cache de sécurité 24 par dévissage de la tige filetée 28.

Dans le mode de réalisation préféré de l'invention, en position montée de la roue 12, au moins trois perçages 18 de la roue 12 reçoivent des boulons 20 de fixation. Les trois boulons 20 définissent ainsi trois points de fixation de référence pour les moyens d'arrêt.

En effet, une face avant transversale 72 de la partie centrale 54 porte trois plots axiaux tubulaires 74 dont chacun est d'un diamètre égal au diamètre de la tête d'un boulon 20 précité. Ces plots 74 sont situés radialement à la même distance de l'axe A que les boulons 20.

Ainsi, comme l'illustre la figure 7, chaque plot tubulaire 74 reçoit la tête du boulon 20 correspondant lorsque le cache 24 de sécurité est mis en place sur la roue 12. Ces plots 74 sont répartis angulairement de façon irrégulière de façon à définir une position univoque de montage du cache de sécurité 24 sur la roue 12.

De la sorte, les plots 74 immobilisent en rotation le cache de sécurité 24 par rapport à la roue 12, et par conséquent aussi par rapport à la carrosserie du véhicule.

Enfin, la face avant 72 de la partie centrale 54 comporte deux tampons 76, qui peuvent notamment être réalisés venus de matière avec le matériau plastique de la partie centrale 54 du cache de sécurité 24, et qui s'étendent vers l'avant de façon à prendre appui en position montée du cache 24 sur la jante 15 de la roue 12 pour stabiliser le cache 24 et éviter les vibrations.

Ainsi, le dispositif 10 permet de réaliser simplement et à moindre coût un verrouillage des boulons 20 de fixation de la roue 12, et de protéger celle-ci de la convoitise des voleurs. De plus, le second mode de réalisation du dispositif 10 permet de protéger la roue 12 des projections de boue, ce qui est particulièrement appréciable dans le cas d'un véhicule de loisirs de type "4×4".

## Revendications

1. Dispositif antivol (10) pour une roue (12) de secours apparente qui est montée à l'extérieur de la carrosserie d'un véhicule automobile, notamment d'un véhicule de loisirs, du type dans lequel une face avant (14) de la jante (15) de la roue (12) de secours est montée en appui axial sur un support (16), et du type dans lequel la jante (15) est fixée sur ce support par l'intermédiaire de moyens de fixation de la roue comportant au moins un boulon (20) de fixation, ce dispositif antivol comportant aussi un cache (24) de sécurité qui, dans une position montée dans laquelle il est verrouillé depuis l'intérieur du véhicule, recouvre au moins une partie de la totalité de la face arrière (26) de la roue (12),
**caractérisé en ce que**
le boulon de fixation traverse un des perçages (18) excentrés de fixation de la roue (12) et au moins un écrou (22) associé de fixation, le support fait saillie vers l'extérieur à partir d'un élément (13) de la carrosserie du véhicule, notamment d'un ouvrant transversal arrière du véhicule, et le cache interdit l'accès aux dits boulon (20) et écrou (22) de fixation de la jante (15) sur le support (16).

2. Dispositif antivol (10) selon la revendication précédente, **caractérisé** en en ce que le cache (24) de sécurité est verrouillé de l'intérieur du véhicule par l'intermédiaire d'une tige (28) de verrouillage qui traverse une ouverture (32) de la jante (15) de la roue (12) et un passage commun (36) du support (16) et de l'élément (13) de carrosserie du véhicule, et d'un organe (35) de verrouillage qui est fixé à l'extrémité (30) de la tige (28) de verrouillage faisant saillie à l'intérieur de l'élément (13) de carrosserie du véhicule.

3. Dispositif antivol (10) selon la revendication précédente, **caractérisé en ce que** la tige (28) de verrouillage est une tige filetée du cache (24) dont l'extrémité libre (30) reçoit un écrou (35) de verrouillage fixé par vissage depuis l'intérieur de l'élément (13) de carrosserie.

4. Dispositif antivol (10) selon la revendication précédente, **caractérisé en ce que** la tige (28) filetée est coaxiale à la roue (12) et traverse une ouverture centrale (30) de celle-ci.

5. Dispositif antivol (10) selon la revendication précédente, **caractérisé en ce que** le cache (24) de sécurité comporte des moyens d'arrêt (44a, 44b, 74) en rotation par rapport à la carrosserie du véhicule pour empêcher son démontage par dévissage de la tige (28) filetée coaxiale depuis l'extérieur du véhicule.

6. Dispositif antivol (10) selon la revendication précédente, **caractérisé en ce que** les moyens d'arrêt en rotation comportent au moins un plot (44a, 44b, 74) excentré creux, qui s'étend à partir de la face avant (27, 72) du cache (24) de sécurité tournée vers la jante (15), et qui est destiné, au montage, à coopérer avec les moyens de fixation (20, 22) de la roue (12).

7. Dispositif antivol (10) selon l'une quelconque des revendications précédentes, **caractérisé en ce que** le cache (24) de sécurité recouvre entièrement la face arrière de la roue (12).

8. Dispositif antivol (10) selon la revendication précédente, **caractérisé en ce que** le cache (24) de sécurité comporte une partie centrale (54), qui recouvre la face arrière (26) de la jante (15), et une partie annulaire (56) périphérique formant un capot qui entoure la surface libre du pneu (17) de la roue (12).

9. Dispositif antivol (10) selon la revendication précédente, **caractérisé en ce que** la partie centrale (54) et la partie annulaire (52) du cache de sécurité (24) sont réalisés par moulage d'un matériau plastique.

10. Dispositif antivol (10) selon l'une des revendications 8 ou 9, **caractérisé en ce que** la partie centrale (54) du cache (24) de sécurité est vissée sur une face avant (60) de la partie (52) annulaire du cache (24) de sécurité qui est tournée vers la roue (12).

11. Dispositif antivol (10) selon l'une quelconque des revendications 7 à 10, **caractérisé en ce que** la tige (28) de verrouillage du cache de sécurité est sertie dans un manchon (38) central de la partie centrale (54) du cache (24) de sécurité.

## Patentansprüche

1. Vorrichtung (10) zum Schutz gegen den Diebstahl eines sichtbar auf der Außenseite der Karosserie eines Kraftfahrzeuges angeordneten Reserverades (12), insbesondere eines Geländewagens, bei dem eine Vorderseite (14) der Felge (15) des Reserverades (12) derart angeordnet ist, dass sie sich axial auf einer Halterung (16) abstützt und bei der die Felge (15) an der Halterung mittels einer Befestigungsanordnung für das Rad befestigt ist, die mindestens einen Befestigungsbolzen (20) aufweist und wobei die Vorrichtung zum Schutz gegen Diebstahl außerdem eine Sicherheitsabdeckung (24) aufweist, die, in der eingebauten Stellung, in der sie vom Inneren des Fahrzeuges aus verriegelt ist, wenigstens einen Teil der gesamten rückwärtigen Fläche (26) des Rades (12) bedeckt, **dadurch gekennzeichnet, dass** der Befestigungsbolzen eine der exzentrisch angeordneten Bohrungen (18) für die Befestigung des Rades (12) durchsetzt und wenigstens eine zugehörige Befestigungsmutter (22), wobei die Halterung (16) ausgehend von einem Bauteil (13) der Karosserie des Fahrzeuges nach außen vorspringt, das insbesondere eine hintere quer angeordnete Heckklappe des Fahrzeuges ist, wobei die Abdeckung den Zugang zum Bolzen (20) und zur Mutter (22) für die Befestigung der Felge (15) an der Halterung (16) verhindert.

2. Vorrichtung (10) zum Schutz gegen Diebstahl nach dem vorhergehenden Anspruch, **dadurch gekennzeichnet, dass** die Sicherheitsabdeckung (24) vom Inneren des Fahrzeuges aus mittels eines Verriegelungsstabes (28) verriegelbar ist, der eine Öffnung (32) der Felge (15) des Rades (12) sowie eine gemeinsame Öffnung (36) der Halterung (16) und des Bauteils (13) der Karosserie des Fahrzeuges durchsetzt sowie mittels eines Verriegelungsteils (35), das am Ende (30) des aus dem Inneren des Bauteils (13) der Karosserie des Fahrzeuges hervorspringenden Verriegelungsstabes (28) befestigbar ist.

3. Vorrichtung (10) zum Schutz gegen Diebstahl nach dem vorhergehenden Anspruch, **dadurch gekennzeichnet, dass** der Verriegelungsstab (28) ein Gewindestab der Abdeckung (24) ist, dessen freies Ende (30) eine Verrieglungsmutter (35) aufnimmt, die vom Inneren des Bauteils (13) der Karosserie aus aufschraubbar ist.

4. Vorrichtung (10) zum Schutz gegen Diebstahl nach dem vorhergehenden Anspruch, **dadurch gekennzeichnet, dass** der Gewindestab (28) koaxial zum Rad (12) ist und eine zentrale Öffnung (30) in ihm durchsetzt.

5. Vorrichtung (10) zum Schutz gegen Diebstahl nach dem vorhergehenden Anspruch, **dadurch gekennzeichnet, dass** die Sicherheitsabdeckung (24) mit einer Anordnung (44a, 44b, 74) zur Verhinderung ihrer Verdrehung relativ zur Karosserie des Fahrzeuges versehen ist um ihre Abnahme durch Abschrauben des koaxialen Gewindestabes (28) von außerhalb des Fahrzeuges zu verhindern.

6. Vorrichtung (10) zum Schutz gegen Diebstahl nach dem vorhergehenden Anspruch, **dadurch gekennzeichnet, dass** die Anordnung zur Verhinderung der Verdrehung zumindest eine exzentrische hohle Steckstelle (44a, 44b, 74) aufweist, die sich ausgehend von der der Felge (15) zugewandten Vorderseite (27, 72) der Sicherheitsabdeckung (24) erstreckt und die dazu dient, während des Einbaus mit der Befestigungsanordnung ( 20, 22) für das Rad (12) zusammen zu wirken.

7. Vorrichtung (10) zum Schutz gegen Diebstahl nach einem der vorhergehenden Ansprüche, **dadurch gekennzeichnet, dass** die Sicherheitsabdeckung (24) die Hinterseite des Rades (12) vollständig abdeckt.

8. Vorrichtung (10) zum Schutz gegen Diebstahl nach dem vorhergehenden Anspruch, **dadurch gekennzeichnet, dass** die Sicherheitsabdeckung (24) einen zentralen Bereich (54) aufweist, der die Hinterseite(28) der Felge (15) und einen ringförmigen Umfangsbereich (56) durch Bildung einer Haube abdeckt, welche die freie Oberfläche des Reifens (17) des Rades (12) umgibt.

9. Vorrichtung (10) zum Schutz gegen Diebstahl, **dadurch gekennzeichnet, dass** der zentrale Bereich (54) und der ringförmige Bereich (56) der Sicherheitsabdeckung (24) durch Giessen eines Kunststoffes hergestellt worden sind.

10. Vorrichtung (10) zum Schutz gegen Diebstahl nach einem der Ansprüche 8 oder-9, **dadurch gekennzeichnet, dass** der zentrale Bereich (54) der Sicherheitsabdeckung (24) auf eine Vorderseite (60) des ringförmigen Bereichs (52) der Sicherheitsabdeckung (24) aufgeschraubt ist und dem Rad (12) zugewandt ist.

11. Vorrichtung (10) zum Schutz gegen Diebstahl nach einem der Ansprüche 7 bis 10, **dadurch gekennzeichnet, dass** der Verriegelungsstab (28) der Sicherheitsabdeckung in eine zentrale Buchse (38) des zentralen Bereichs (54) der Sicherheitsabdeckung (24) eingreift.

## Claims

1. An anti-theft device (10) for a visible spare wheel (12) which is mounted on the outside of the body of a motor vehicle, in particular a recreational vehicle, of the type in which a front face (14) of the dish (15) of the spare wheel (12) is mounted in a condition of axially bearing against a support (16) and of the type in which the dish (15) is fixed on said support by way of means for fixing the wheel comprising at least one fixing bolt (20), the anti-theft device also comprising a security cover (24) which in a mounted position in which it is locked from the interior of the vehicle covers at least a part of the whole of the rear face (26) of the wheel (12), **characterised in that** the fixing bolt passes through one of the eccentric holes (18) for fixing the wheel (12) and at least one associated fixing nut (22), the support projecting outwardly from an element (13) of the body of the vehicle, in particular a rear transverse openable door of the vehicle, and the cover prevents access to said fixing bolts (20) and nut (22) for fixing the dish (15) on the support (16).

2. An anti-theft device (10) according to the preceding claim **characterised in that** the security cover (24) is locked from the interior of the vehicle by way of a locking rod (28) which passes through an opening (32) in the dish (15) of the wheel (12) and a common passage (36) of the support (16) and the body element (13) of the vehicle, and a locking member (35) which is fixed to the end (30) of the locking rod (28) projecting in the interior of the body element (13) of the vehicle.

3. An anti-theft device (10) according to the preceding claim **characterised in that** the locking rod (28) is a screwthreaded rod of the cover (24), the free end (30) of which receives a locking nut (35) which is fixed by screwing from the interior of the body element (13).

4. An anti-theft device (10) according to the preceding claim **characterised in that** the screwthreaded rod (28) is coaxial with the wheel (12) and passes through a central opening (30) therein.

5. An anti-theft device (10) according to the preceding claim **characterised in that** the security cover (24) comprises arresting means (44a, 44b, 74) for preventing rotational movement with respect to the body of the vehicle to prevent removal thereof by unscrewing the coaxial screwthreaded rod (28) from the outside of the vehicle.

6. An anti-theft device (10) according to the preceding claim **characterised in that** the rotational movement-preventing arresting means comprise at least one hollow eccentric stud (44a, 44b, 74) which extends from the front face (27, 72) of the security cover (24) facing towards the dish (15) and which is intended upon mounting to cooperate with the fixing means (20, 22) of the wheel (12).

7. An anti-theft device (10) according to any one of the preceding claims **characterised in that** the security cover (24) entirely covers the rear face of the wheel (12).

8. An anti-theft device (10) according to the preceding claim **characterised in that** the security cover (24) comprises a central portion (54) which covers the rear face (26) of the dish (15) and an annular peripheral portion (56) forming a cowling which surrounds the free surface of the tyre (17) of the wheel (12).

9. An anti-theft device (10) according to the preceding claim **characterised in that** the central portion (54) and the annular portion (52) of the security cover (24) are produced by moulding a plastic material.

10. An anti-theft device (10) according to one of claims 8 and 9 **characterised in that** the central portion (54) of the security cover (24) is screwed on to a front face (60) of the annular portion (52) of the security cover (24) which faces towards the wheel (12).

11. An anti-theft device (10) according to any one of claims 7 to 10 **characterised in that** the locking rod (28) of the security cover is crimped in a central sleeve (38) of the central portion (54) of the security cover (24).
